# EUROPEAN PATENT SPECIFICATION

(11) **EP 0 756 090 B1**
(45) Date of publication and mention of the grant of the patent: **21.11.2001**
(21) Application number: 96305442.4
(22) Date of filing: 24.07.1996
(51) Int. Cl.: F15B 13/044, F15B 13/042

(54) **Pilot operated change-over valve**
Vorgesteuertes Umschaltventil
Vanne de commutation pilotée

(30) Priority: 26.07.1995 JP 21012595
(43) Date of publication of application: 29.01.1997
(73) Proprietor: SMC CORPORATION, Minato-ku Tokyo 105 (JP)
(72) Inventor: Sato, Hideharu, c/o SMC Corp. Tsukuba Techn. Ctr., Tsukuba-gun, Ibaraki (JP)
(74) Representative: Findlay, Alice Rosemary

(56) References cited:
- EP-A- 0 655 575
- FR-A- 2 257 837
- GB-A- 1 270 958
- US-A- 3 270 776
- US-A- 5 273 074

## Description

This invention relates to a pilot operated change-over valve employing an electromagnetic pilot valve for switching the position of a main valve.

Two types of pilot operated electromagnetic change-over valves are known in the art, that is to say, a single solenoid type change-over valve incorporating a single electromagnetic pilot valve and a double solenoid type change-over valve incorporating a couple of electromagnetic pilot valves.

The double solenoid type change-over valve is provided with, in association with a main valve containing a main valve member for switching the flow direction of a main fluid, a couple of electromagnetic pilot valves for switching pilot fluid circuits to the valve member. Namely, for switching the position of the main valve member, the two pilot valves are alternately turned on and off to apply a pilot fluid pressure alternately on pistons at axially opposite ends of the main valve member.

On the other hand, the single solenoid type change-over valve is provided with, in association with a main valve containing a valve member for switch the flow direction of a main fluid, a single electromagnetic pilot valve for switching a pilot fluid flow to the valve member. In this case, the main valve member is constantly biased in one direction by a pilot fluid pressure which is supplied to one axial end of the valve member, and, at the time of switching the position of the main valve member, the pilot fluid pressure is supplied to or discharged from a piston at the other end of the valve member by turning on and off the pilot valve.

In this manner, a double solenoid type change-over valve and a single solenoid type change-over valve differ from each other in switching mechanism as well as in construction, so that it has been the general practice to use different component parts for the two types of change-over valves except for only a limited number of parts which can be shared by the two types of change-over valves. Namely, it has been considered difficult to build these two different types of change-over valves mostly by the use of commonly shared component parts.

In this regard, however, in order to facilitate change-over valve designing and fabrication processes, parts administration, maintenance and service or remodelling into a different type, or for the purpose of attaining a drastic reduction in cost, it is desirable to increase as much as possible the percentage of the component parts which can be commonly shared between change-over valves of two different types. Particularly, it is desirable to develop a change-over valve construction which can operate either as a double solenoid type or as a single solenoid type simply by replacing or changing a small number of component parts, for example, in such a way that a double solenoid change-over valve is readily remodelled into a single solenoid type simply by substituting a component part for one of solenoid valves which are assembled with a main valve.

French Patent No. 2257837 describes a valve which can be operated electropneumatically with one or two pilot valves or simply pneumatically with no pilot valves. The valve has two end plates, identically constructed which are connectable to either a cover or a pilot valve. The valve includes a selector to allow external or internal piloting of the pilot chambers.

It is an object of the present invention to provide a pilot operated change-over valve constructed mostly of component parts which can be commonly shared by a double solenoid type change-over valve and a single solenoid type change-over valve, allowing the change-over valve to be altered easily and readily from a double solenoid type to a single solenoid type or vice-versa in a reliable manner.

It is another object of the present invention to provide a pilot operated change-over valve of the sort as mentioned above, employing a couple of valve drive pistons which are arranged in such dimensional relations as will be able to produce driving forces most efficiently no matter whether the change-over valve is used as a double solenoid type or as a single solenoid type.

In accordance with the present invention, operated change-over valve comprising a main valve with a valve casing having a main casing provided with plural ports including a supply port and two end members located at and fixed to the opposite ends of the main casing, a valve member which is received in the main casing for hermetical sliding in the axial direction of the valve member and which switches communications between the plural ports, said valve member having opposite axial ends, a first pilot chamber at one end of the valve member and a second pilot chamber at the other end of the valve member, each of the end members, having a pilot pressure supply passage communicating with the supply port and a pilot pressure output passage communicating with each of the first and second pilot chambers, the opposite ends of the end members being provided with common interfacial end faces, and an electromagnetic pilot valve mounted on the common interfacial end face of one end member which controls supply of a pilot fluid from the pilot pressure supply passage to the first pilot chamber through the pilot pressure output passage and which switches communication of the first pilot chamber between the pilot pressure supply passage and a pilot pressure discharge port, a second pilot valse or an adapter plate mounted on the common interfacial end face on the other end member and which provides the pilot fluid from the pilot pressure supply passage to the second pilot chamber through the pilot pressure output passage wherein the two end members have substantially identical shape and construction, characterised in that the end members are end casings; in that a large diameter piston having opposite axial ends is provided in the said one end casing so as to engage at one end with the end of the valve member and to define an first pilot chamber at the other end thereof; in that a small diameter piston having a diameter smaller than that of the large diameter piston having opposite axial ends is provided in the said other end casing so as to engage at one end with the other end of the valve member and to define the second pilot chamber at the other end thereof; in that the identical shape and construction of the end casings is with the exception of the large and small diameter pistons, and in that each end casing has a manual operating unit which communicates each of the first and second pilot chambers directly with the pilot pressure supply passage.

The pilot supply unit may comprise either a second pilot valve or an adaptor plate which communicates with the pilot pressure supply passage and the pilot pressure output passage.

The change-over valve, with the above-described construction according to the invention, has the main valve and one electromagnetic pilot valve on the side of the larger diameter piston assembled together in such a manner as to permit common use by a double solenoid type change-over valve and a single solenoid type change-over valve, so that it can be easily built or altered into a double solenoid type or a single solenoid type, whichever is desirable, simply by selectively mounting a second pilot valve or an adapter plate on the common interfacial end face at one end of the valve casing on the side of the small diameter piston.

Preferably the large and small diameter pistons are dimensioned such that they have pressure receiving areas substantially in a ratio of 2:1 for the purpose of producing driving forces most efficiently for a dual purpose change-over valve which is operated either as a double solenoid type or as a single solenoid type.

When an adaptor plate is mounted on the common interfacial end face on the valve casing on the side of the small diameter piston to operate the change-over valve as a single solenoid type, part of the adapter plate is extended axially along the valve casing to cover a top surface of the manual operating means on the side of the small diameter piston.

The invention will now be further described by way of example with reference to the accompanying drawings in which:
Fig. 1 is a schematic sectional view of a change-over valve according to the invention, which is adapted to operate as a double solenoid type; and
Fig. 2 is a schematic sectional view of a change-over valve according to the invention, which is adapted to operate as a single solenoid type.

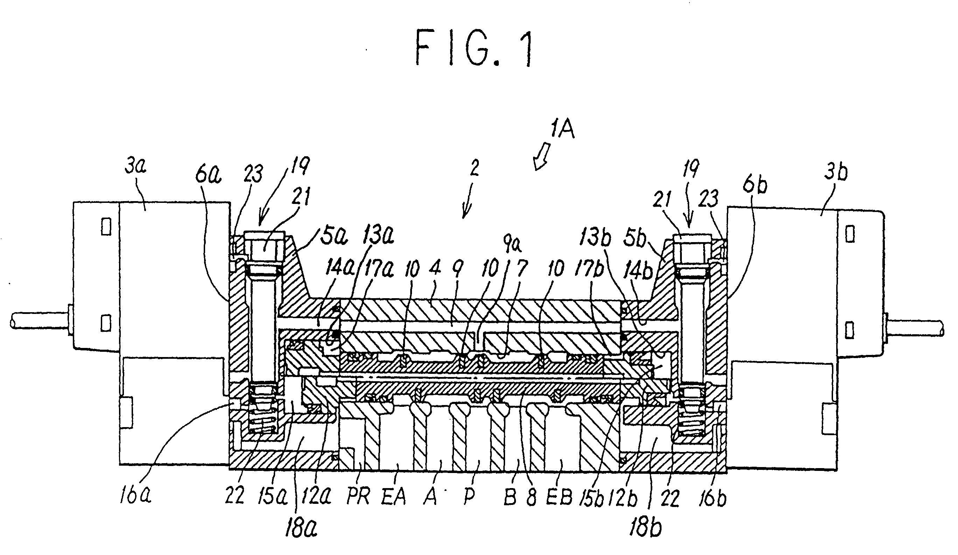

Shown in Fig. 1 is a first embodiment of a pilot operated change-over valve which is adapted to operate as a double solenoid type change-over valve. The pilot operated change-over valve 1A of this embodiment is largely constituted by a main valve 2 for switching a main fluid, and a couple of electromagnetic pilot valves 3a and 3b which are detachably mounted at the opposite ends of the main valve 2 by means of bolts or other suitable fixation means.

The main valve 2 is provided with a valve casing including a centrally located main casing 4, and interfacial end casings 5a and 5b which are located at and fixed to the opposite ends of the main casing 4.

The main casing 4 is provided with a supply port P for a pressurized fluid like compressed air substantially at a central position in its longitudinal direction, a couple of output ports A and B located on the opposite sides of the supply port P, a couple of exhaust ports EA and EB located further on the outer sides of the output ports A and B, a valve bore 7 formed longitudinally through the main body 4 in communication with the respective ports, a valve member 8 hermetically received in the valve bore 7 for sliding movements therein, and a pilot pressure supply passage 9 formed longitudinally through the main casing 4 and provided with a communicating passage 9a for communication with the above-mentioned supply port P.

The valve member 8 is of the spool type with a seal member 10 fitted around its circumference to switch connections of the output ports A and B to and from the supply port P and the exhaust port EA or EB as it is reciprocated within the valve bore 7 under the influence of the actions of a pilot fluid pressure.

The pilot valves 3a and 3b are 3-port electromagnetic valves of known construction and, although their internal constructions are omitted in the drawings, are each provided with a pilot supply port in communication with the supply port P through the pilot supply passage 9 and an outer pilot supply passage 14a or 14b, a pilot output port to output a pilot fluid to a pilot chamber 15a or 15b behind a piston 12a or 12b, and a pilot discharge port to discharge therethrough the pilot fluid in the pilot chamber 15a or 15b. As the solenoids 3a and 3b are alternately turned on and off, the respective pilot output ports are alternately connected to the pilot supply port and the pilot discharge port.

The pilot discharge ports of the above-described two pilot valves 3a and 3b are in communication with a pilot discharge port PR which is opened in the main valve casing 4, respectively through pilot discharge passages 18a and 18b.

The two pilot valves 3a and 3b are preferred to be identical with each other in construction, so that they can be attached to either end of the main valve 2. Similarly, the outer interfacial end faces 6a and 6b of the two end casings 5a and 5b of the main valve 2 are desired to be of the same construction for the same reason.

One end casing 5a is provided with a piston chamber 13a of a large diameter on its inner end face to be assembled with the main casing 4, the large diameter piston chamber 13a being located contiguously on the outer side of the valve bore 7 of the main casing 4. Received for hermetical sliding movements within the piston chamber 13a is a large diameter piston 12a in abutting engagement with one end of the valve member 8.

Similarly contiguously with the valve bore 7, the other end casing 5b is provided with a piston chamber 13b of a small diameter on its inner end face to be assembled with the main casing 4. A piston 12b of a small diameter is received in the piston chamber 13b for hermetical sliding movements therein in abutting engagement with the other end of the valve member 8.

Preferably, the above-described large and small diameter pistons 12a and 12b are formed in a diametral ratio of 2:1, in other words, to have pressure receiving areas in a ratio of 2:1.

The end casings 5a and 5b are provided with, in addition to the afore-mentioned pilot supply passages 14a and 14b which communicate the pilot supply passage 9 with the pilot supply ports of the respective pilot valves 3a and 3b, pilot output passages 16a and 16b which communicate the pilot chambers 15a and 15b with pilot output ports of the pilot valves 3a and 3b, and pilot discharge passages 18a and 18b which communicate pilot discharge ports of the pilot valves 3a and 3b with the outside through the pilot discharge port PR, along with respiratory chambers 17a and 17b formed between the valve member 8 and the piston 12a or 12b.

Further, each one of the end casings 5a and 5b of the main valve 2 is provided with a manual operating means 19, including an operating button 21 which can be manually pushed down to communicate the pilot chamber 15a or 15b directly with the pilot supply passage 14a or 14b while blocking communication between the pilot output passage 16a or 16b and the pilot chamber 15a or 15b, a coil spring 22 urging the operating button 21 in the upward direction in the drawing, and a stopper 23 in engagement with a lateral side of the operating button 21 serving to delimit the stroke length of the operating button 21 while preventing the latter from falling off the end casing 5a or 5b.

The two end casings 5a and 5b are formed to have the same outer configuration and internal construction except for the piston chambers 13a and 13b which are formed in a ratio of 2:1 in diameter as described above.

In the above-described first embodiment, upon turning on the solenoid of the pilot valve

3a and at the same time turning off the solenoid of the pilot valve 3b of the change-over valve 1A, a pilot fluid is produced at the pilot output port on the side of the pilot valve 3a and fed to the pilot chamber 15a through the pilot output passage 16a, while a pilot fluid in the pilot chamber 15b on the side of the pilot valve 3b is discharged to the outside through the pilot discharge port PR from the pilot output passage 16b via the pilot valve 3b and a passage which is not shown in the drawing. As a result, the valve member 8 is moved to the right as indicated by a lower half portion in Fig. 1 to communicate the supply port P and the output port B with the output port A and the exhaust port EB, respectively.

When the solenoids of the pilot valves 3a and 3b are turned on and off in inverse relations with the above-described operation, the valve member 8 is moved to the left as indicated by an upper half portion in the drawing, communicating the supply port P and the output port A with the output port B and the exhaust port EA, respectively.

The pilot operated change-over valve 1A of the above-described first embodiment can be easily altered into a single solenoid type by substituting the pilot valve 3b on the side of the small diameter piston 12b which an adapter plate which will be described hereinlater.

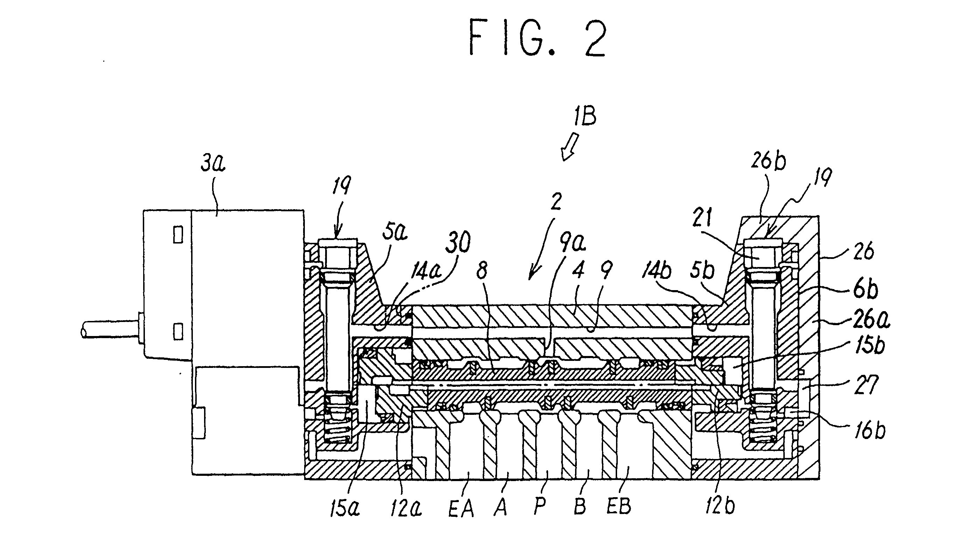

Shown in Fig. 2 is a second embodiment, a single solenoid type change-over valve 1B which has an adapter plate 26 mounted on the common interfacial end face 6b instead of the pilot valve 3b of the foregoing first embodiment. Accordingly, except the adapter plate 26, the change-over valve 1B is exactly same as the change-over valve 1A of the first embodiment in construction of all major components including the main valve 2 and the pilot valve 3a.

The adapter plate 26 is formed substantially in an inverted L-shape, having its main body 26a joined with the interfacial end face 6b of the end casing 5b in such a manner as to communicate the pilot supply passage 14b with the pilot output passage 16b by way of a groove 27 which is formed on the inner side of the main body 26a. A bent portion 26b at the upper end of the main body 26a is placed on top of the end casing 5b to cover the upper side of the operating button 21 of the manual operating means 19.

Therefore, the pilot chamber 15b of the small diameter piston 12b is constantly supplied with the pilot fluid from the supply port P.

In the above-described second embodiment when the solenoid of the pilot valve 3a is in a de-energized state, the valve member 8 is moved to the left as indicated by an upper half portion in the drawing under the influence of the action of the pilot fluid pressure prevailing in the pilot chamber 15b, communicating the supply port P and the output port A with the output port B and the exhaust port EA, respectively.

Upon energizing the solenoid of the pilot valve 3a, the pilot fluid is supplied to the pilot chamber 15a. In this instance, since the piston 12a has a larger pressure receiving area than the piston 12b, the valve member 8 is moved to the right as indicated by a lower half portion in the drawing by the pressure differential between the two pistons despite the pilot fluid which is supplied to the pilot chamber 15b, as a result communicating the supply port P and the output port B with the output port A and the exhaust port EB, respectively.

In this regard, if the pressure receiving areas of the large and small diameter pistons 12a and 12b are set in a ratio of 2:1, these two pistons can produce driving forces in a ratio of 2:1 in proportion to their pressure receiving areas in case the change-over valve is used as a double solenoid type. On the other hand, in a case where the change-over valve is used as a single solenoid type, the driving force of the large diameter piston 12a, which moves the valve member 8 to the right in the drawing against a force acting on the small diameter piston 12b, is substantially equal with the driving force of the small diameter piston 12b which moves the valve member 8 to the left. Namely, when arranged in such dimensional relations, the large and small pistons 12a and 12b can produce driving forces most efficiently for the dual purpose change-over valve which can operate either as a double solenoid type or as a single solenoid type.

Since both the main valve and the pilot valve on the side of the large diameter piston in the above-described valve construction can be shared by both of double and single solenoid type change-over valves, it can be easily altered from a double solenoid type to a single solenoid type or vice versa simply by selectively mounting either the second pilot valve or the adapter plate on the common interfacial end face on the side of the small diameter piston.

Thus, the change-over valve construction according to the invention makes it possible to share most of major component parts between different types of electromagnetic change-over valves, contributing to facilitate valve designing and fabrication processes as well as parts administration, maintenance, troubleshooting of component parts and remodelling into a different type of change-over valve, accompanied by substantial reductions in cost.

The replacement of a pilot valve by an adapter plate is extremely easy, so that a manufacturer can readily alter the type of change-over valve in response to the need of users. In so doing, the alteration into a different type can be accomplished in a reliable manner since the replacing component is distinctively different in appearance from one type to another to such a degree as to preclude the possibilities of mistakingly mounting a component part of one type for another type.

Although both of the above-described embodiments are of the so-called internal pilot type having a pilot fluid led into the respective pilot chambers 15a and 15b from the supply port P of the main valve 2, the present invention can be similarly applied to the external pilot type which has an external pilot fluid source other than the supply port P. For instance, as indicated by a chain line in Fig. 2, a pilot supply port 30 may be provided on either the end casing 5a or 5b in communication with the pilot supply passages 9, 14a and 14b, while closing the communication hole 9a which connects the pilot supply passage 9 with the supply port P.

## Claims

1. A pilot operated change-over valve comprising a main valve (2) with a valve casing having a main casing (4) provided with plural ports including a supply port (P) and two end members (5a, 5b) located at and fixed to the opposite ends of the main casing (4), a valve member (8) which is received in the main casing (4) for hermetical sliding in the axial direction of the valve member and which switches communications between the plural ports, said valve member (8) having opposite axial ends, a first pilot chamber (15a) at one end of the valve member (8) and a second pilot chamber (15b) at the other end of the valve member (8), each of the end members (5a, 5b) having a pilot pressure supply passage (14a, 14b) communicating with the supply port (P) and a pilot pressure output passage (16a, 16b) communicating with each of the first and second pilot chambers (15a, 15b) the opposite ends of the end members (5a, 5b) being provided with common interfacial end face (6a, 6b), and an electromagnetic pilot valve (3a) mounted on the common interfacial end face (6a) of one end member (5a) which controls supply of a pilot fluid from the pilot pressure supply passage (14a) to the first pilot chamber (15a) through the pilot pressure output passage (16b) and which switches communication of the first pilot chamber (15a) between the pilot pressure supply passage (14a) and a pilot pressure discharge port, a second pilot valve or an adaptor plate (3b, 26) mounted on the common interfacial end face (6b) on the other end member (5b) and which provides the pilot fluid from the pilot pressure supply passage (14b) to the second pilot chamber (15b) through the pilot pressure output passage (16b), wherein the two end members (5a, 5b) have substantially identical shape and construction, **characterised in that** the end members are end casings (5a, 5b); **in that** a large diameter piston (12a) having opposite axial ends is provided in the said one end casing (5a) so as to engage at one end thereof with the end of the valve member (8) and to define with said one end casing the first pilot chamber (15a) at the other end thereof; **in that** a small diameter piston (12b) having a diameter smaller than that of the large diameter piston (12a) and having opposite axial ends is provided in the said other end casing (5b) so as to engage at one end thereof with the other end of the valve member (8) and to define with said other end casing the second pilot chamber (15b) at the other end thereof; **in that** the identical shape and construction of the end casings (5a, 5b) is with the exception of the large and small diameter pistons (12a, 12b), and **in that** each end casing (5a, 5b) has a manual operating unit (19) which communicates each of the first and second pilot chambers (15a, 15b) directly with the pilot pressure supply passage (14a, 14b).

2. A pilot operated change-over valve as claimed in Claim 1, wherein the large and small diameter pistons (12a, 12b) are formed to have pressure receiving areas substantially in a ratio of 2:1.

3. The pilot operated change-over valve as claimed in Claim 1 or 2, wherein the pilot pressure supply unit comprises a second electromagnetic pilot valve (3b).

4. A pilot operated change-over valve as claimed in Claim 1 or 2, wherein the pilot pressure supply unit comprises an adapter plate (26) having a groove (27) which directly communicates the pilot pressure supply passage (14b) and the pilot pressure output passage (16b).

5. A pilot operated change-over valve as claimed in Claim 4, wherein the adapter plate (26) is partly extended onto the valve casing to cover a top side of the manual operating unit (19) on the side of the small diameter piston (3b).

## Patentansprüche

1. Vorgesteuertes Umschaltventil, das aufweist: ein Hauptventil (2) mit einem Ventilgehäuse das ein Hauptgehäuse (4), das mit mehreren Anschlüssen einschließlich einem Zufuhranschluß (P) versehen ist, und zwei Endglieder (5a, 5b) aufweist, die an den gegenüberliegenden Enden des Hauptgehäuses (4) angeordnet und befestigt sind, ein Ventilglied (8), das im Hauptgehäuse (4) aufgenommen ist, um in die axiale Richtung des Ventilgliedes hermetisch zu gleiten, und das Verbindungen zwischen den mehreren Anschlüssen schaltet, wobei das Ventilglied (8) gegenüberliegende axiale Enden, eine erste Vorsteuerkammer (15a) an einem Ende des Ventilgliedes (8) und eine zweite Vorsteuerkammer (15b) am anderen Ende des Ventilgliedes (8) aufweist, wobei jedes der Endglieder (5a,5b) einen vorsteuerdruck-Zufuhrkanal (14a,14b), der mit dem Zufuhranschluß (P) in Verbindung steht, und einen Vorsteuerdruck-Ausgangskanal (16a, 16b) aufweist, der mit jeder der ersten und zweiten Vorsteuerkammern (15a, 15b) in Verbindung steht, wobei die gegenüberliegenden Enden der Endglieder (5a,5b) mit gemeinsamen Schnittstellen-Endflächen (6a,6b) versehen sind, und ein elektromagnetisches Vorsteuerventil (3a), das an der gemeinsamen Schnittstellen-Endfläche (6a) eines Endgliedes (5a) montiert ist, das die Zufuhr eines Vorsteuerfluids aus dem Vorsteuerdruck-Zufuhrkanal (14a) durch den Vorsteuerdruck-Ausgangskanal (16b) zur ersten Vorsteuerkammer (15a) steuert und das die Verbindung der ersten Vorsteuerkammer (15a) zwischen dem Vorsteuerdruck-Zufuhrkanal (14a) und einem Vorsteuerdruck-Auslaßanschluß schaltet, ein zweites Vorsteuerventil oder eine Adapterplatte (3b,26), die an der gemeinsamen Schnittstellen-Endfläche (6b) an dem anderen Endglied (5b) angebracht ist und das Vorsteuerfluid aus dem Vorsteuerdruck-Zufuhrkanal (14b) durch den Vorsteuerdruck-Ausgangskanal (16b) an die zweite Vorsteuerkammer (15b) liefert, wobei die beiden Endglieder (5a, 5b) eine im wesentlichen identische Form und einen im wesentlichen identischen Aufbau aufweisen, **dadurch gekennzeichnet, daß** die Endglieder Endgehäuse (5a, 5b) sind; daß ein Kolben (12a) mit großem Durchmesser, der gegenüberliegende axiale Enden aufweist, in dem einen Endgehäuse (5a) so vorgesehen ist, daß er an einem Ende desselben mit dem Ende des Ventilgliedes (8) in Eingriff steht und mit dem einen Endgehäuse die erste Vorsteuerkammer (15a) am anderen Ende desselben definiert; daß ein Kolben (12b) mit kleinem Durchmesser, der einen kleineren Durchmesser als den des Kolbens (12a) mit großem Durchmesser und gegenüberliegende axiale Enden aufweist, in dem Endgehäuse (5b) so vorgesehen ist, daß er an einem Ende desselben mit dem anderen Ende des Ventilgliedes (8) in Eingriff steht und mit dem anderen Endgehäuse die zweite Vorsteuerkammer (15b) am anderen Ende desselben definiert; daß die identische Form und der identische Aufbau der Endgehäuse (5a, 5b) mit der Ausnahme der Kolben (12a,12b) mit großem und kleinem Durchmesser zutrifft, und daß jedes Endgehäuse (5a,5b) eine manuelle Betätigungseinheit (19) aufweist, die jede der ersten und zweiten Vorsteuerkammern (15a, 15b) direkt mit dem Vorsteuerdruck-Zufuhrkanal (14a, 14b) verbindet.

2. Vorgesteuertes Umschaltventil nach Anspruch 1, wobei die Kolben (12a,12b) mit großem und kleinem Durchmesser so ausgebildet sind, daß sie druckaufnehmende Flächen in einem Verhältnis von im wesentlichen 2:1 aufweisen.

3. Vorgesteuertes Umschaltventil nach Anspruch 1 oder 2, wobei die Vorsteuerdruck-Zufuhreinheit ein zweites elektromagnetisches Vorsteuerventil (3b) aufweist.

4. Vorgesteuertes Umschaltventil nach Anspruch 1 oder 2, wobei die Vorsteuerdruck-Zufuhreinheit eine Adapterplatte (26) aufweist, die eine Nut (27) aufweist, die den Vorsteuerdruck-Zufuhrkanal (14b) und den Vorsteuerdruck-Ausgangskanal (16b) direkt verbindet.

5. Vorgesteuertes Umschaltventil nach Anspruch 4, wobei die Adapterplatte (26) sich teilweise auf dem Ventilgehäuse erstreckt, um eine Oberseite der manuellen Betätigungseinheit (19) auf der Seite des Kolbens (3b) mit kleinem Durchmesser abzudecken.

## Revendications

1. Soupape d'inversion actionnée par pilote comprenant une soupape principale (2) qui possède un corps de soupape ayant un corps principal (4) muni d'orifices multiples qui comprennent un orifice d'arrivée (P), et deux éléments terminaux (5a, 5b) placés et fixés aux extrémités opposées du corps principal (4), un élément de soupape (8) qui est logé dans le corps principal (4) pour coulisser à joint étanche dans la direction axiale de l'élément de soupape et qui commute les communications entre les plusieurs orifices, ledit élément de soupape (8) possédant des extrémités axiales opposées, une première chambre pilote (15a) à une première extrémité de l'élément de soupape (8) et une deuxième chambre pilote (15b) à l'autre extrémité de l'élément de soupape (8), chacun des éléments terminaux ayant un passage d'arrivée de la pression pilote (14a, 14b) qui communique avec l'orifice d'arrivée (P) et un passage de sortie de la pression pilote (16a, 16b) qui communique avec chacune des première et deuxième chambres pilotes (15a, 15b), les extrémité opposées des éléments terminaux (5a, 5b) étant munies de faces terminales interfaciales communes (6a, 6b), et une soupape pilote électromagnétique (3a) montée sur la face terminale interfaciale commune (6a) d'un élément terminal (5a) qui commande l'envoi d'un fluide pilote du passage d'arrivée de la pression pilote (14a) à la première chambre pilote (15a) à travers le passage de sortie de la pression pilote (16b) et qui commute la communication de la première chambre pilote (15a) entre le passage d'arrivée de la pression pilote (14a) et un orifice de décharge de la pression pilote, une deuxième soupape pilote ou une plaque adaptatrice (3b, 26) montée sur la face terminale interfaciale commune (6b) de l'autre élément terminal (5b) et qui transmet le fluide pilote du passage d'arrivée de la pression pilote (14b) à la deuxième chambre pilote (15b) à travers le passage de sortie de la pression pilote (16b), dans laquelle les deux éléments terminaux (5a, 5b) ont une forme et une construction pratiquement identiques, **caractérisée en ce que** les éléments terminaux sont des corps terminaux (5a, 5b) ; **en ce qu'**un piston de grand diamètre (12a) possédant des extrémités axiales opposées est prévu dans ledit un corps terminal (5a) de manière à entrer en contact à une de ses extrémités avec l'extrémité de l'élément de soupape (8) et à définir, avec ledit un corps terminal, une première chambre pilote à son autre extrémité ; **en ce qu'**un piston de petit diamètre (12b) ayant un diamètre inférieur à celui du piston de grand diamètre (12a) et possédant des extrémités axiales opposées est prévu dans ledit autre corps terminal (5b) de manière à entrer en contact à une de ses extrémités avec l'autre extrémité de l'élément de soupape (8) et à définir, avec ledit autre corps terminal, la deuxième chambre pilote (15b) à son autre extrémité ; **en ce que** la forme et la construction identiques des corps terminaux existent à l'exception des pistons de grand diamètre et de petit diamètre (12a, 12b), et **en ce que** chaque corps terminal (5a, 5b) possède une unité de commande manuelle (19) qui fait communiquer directement chacune des première et deuxième chambres pilotes (15a, 15b) avec le passage d'arrivée de la pression pilote (14a, 14b).

2. Soupape d'inversion actionnée par pilote selon la revendication 1, dans laquelle les pistons de grand diamètre et de petit diamètre (12a, 12b) sont formés de manière à présenter des surfaces de réception de la pression sensiblement dans un rapport de 2 : 1.

3. Soupape d'inversion actionnée par pilote selon la revendication 1 ou 2, dans laquelle l'unité d'arrivée de la pression pilote comprend une deuxième soupape pilote électromagnétique (3b).

4. Soupape d'inversion actionnée par pilote selon la revendication 1 ou 2, dans laquelle l'unité d'arrivée de la pression pilote comprend une plaque adaptatrice (26) ayant une gorge (27) qui fait communiquer directement le passage d'arrivée de pression pilote (14b) et le passage de sortie de pression pilote (16b).

5. Soupape d'inversion actionnée par pilote selon la revendication 4, dans laquelle la plaque adaptatrice (26) est partiellement prolongée sur le corps de soupape pour recouvrir la face supérieure de l'unité de commande manuelle (19) sur le côté du piston de petit diamètre (3b).
